# EUROPEAN PATENT SPECIFICATION

(11) **EP 3 114 160 B1**
(45) Date of publication and mention of the grant of the patent: **15.04.2020**
(21) Application number: 15706014.6
(22) Date of filing: 20.02.2015
(51) Int. Cl.: C08K 5/00, C08K 5/18, C09K 15/18

(54) **ANTIOXIDANT COMPOSITIONS**
ANTIOXIDATIONSZUSAMMENSETZUNGEN
COMPOSITIONS ANTIOXYDANTES

(30) Priority: 03.03.2014 GB 201403714
(43) Date of publication of application: 11.01.2017
(73) Proprietor: SI Group Switzerland (CHAA) GmbH, 4133 Pratteln (CH)
(72) Inventor: ZAHALKA, Hayder, CH-4153 Reinach (CH); POWER, Maurice, CH-4153 Reinach (CH); HILL, Jonathan, CH-4153 Reinach (CH)
(74) Representative: TL Brand & Co
(86) International application number: PCT/EP2015/053663
(87) International publication number: WO 2015/132087

(56) References cited:
- EP-A1- 0 502 520
- WO-A1-92/06133
- DE-T2- 69 223 078
- US-A1- 2007 203 035
- US-A1- 2010 130 396

## Description

The present invention relates to antioxidant compositions. The antioxidant compositions are, in particular though not exclusively, useful for the stabilisation of polyols and polyurethanes, including polyurethane foams.

Polyurethanes constitute a class of polymers with a range of structures, properties and applications. They all have carbamate or urethane linkages (-NH-C(=O)-O-) and can be made by reacting isocyanates with polyols. They can be tailored according to the choice of isocyanate and polyol, the presence of other component(s), and the reaction conditions. Polyurethanes include thermoplastic materials and thermosetting materials, and are used to produce flexible and rigid foams, coatings, fibres, moulded products, elastomeric components, seals and adhesives, amongst other products.

Polyurethanes are susceptible to degradation over time. Preparation or processing of the polyurethanes can also bring about or enhance degradation. The main cause of degradation, as with many other organic materials, is reaction with oxygen in a free radical autoxidation cycle. The formation of free radicals can be triggered or enhanced by exposure to heat or radiation (particularly UV light), or reaction of polymer with other components or impurities. The free radicals then react with oxygen to form peroxy radicals. The peroxy radicals react with further polymer to produce hydroperoxides, which themselves decompose to result in further reactive free radical species.

Antioxidants can be used to break the degradation cycle. Some antioxidants, known as primary antioxidants, are designed to react with peroxy radicals. Other antioxidants, known as secondary antioxidants, are designed to react with hydroperoxides.

Types of primary antioxidants include sterically hindered phenols and secondary arylamines, e.g. as disclosed in US 4,824,601. It is known to use these two types in combination for the stabilisation of polyurethanes. For example, Ciba Speciality Chemicals have marketed blends of the sterically hindered phenol "Irganox 1135", having the following structure wherein R denotes C7 to C9 alkyl: 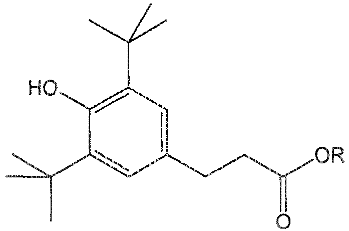 with the secondary arylamine "Irganox 5057", having the following structure wherein each R independently denotes butyl, octyl, other alkyl chains, or H:

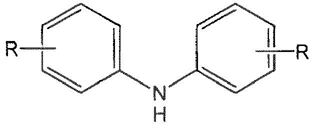

Unfortunately, these and other blends exhibit fogging issues.

There is a need for improved antioxidant compositions, in particular liquid antioxidant compositions, which provide effective stabilisation and at the same time avoid or reduce fogging.

We have developed a specific combination of components which provides improved results.

The present invention is defined in claims 1-14 as attached. According to a first aspect of the present invention there is provided a stabilising composition for a polyol or polyurethane, comprising:
at least one secondary arylamine having the formula I: 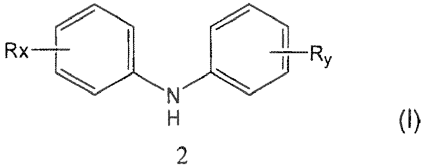 wherein:
   the or each R, which may be the same or different, independently denotes an optionally substituted hydrocarbyl group having at least 5 carbon atoms;
   x and y are each independently from 0 to 5 provided that at least one of x and y is at least 1; and
a phenolic antioxidant having a molecular weight of at least 390, the composition and the secondary arylamine being a liquid at ambient conditions and being substantially free from diphenylamine and from lower alkylated diphenylamine antioxidants.

According to the present invention "ambient conditions" means a temperature of 25°C and atmospheric pressure i.e. 101.325 kPa.

Preferably both the phenolic antioxidant and the secondary arylamine are liquid at ambient conditions.

The optionally substituted hydrocarbyl group has at least 5 carbon atoms and thus, may be considered a "higher" hydrocarbyl group. Preferably the optionally substituted hydrocarbyl group has at least 6 carbon atoms, more preferably at least 7 carbon atoms, yet more preferably at least 8 carbons atoms, and most preferably at least 9 carbon atoms.

By "lower alkylated diphenylamine" we mean materials having the same general structure set out in formula I, except in which R represents a lower hydrocarbyl group (each R being the same or different); "lower" in this connection meaning C₄ and below, C₃ and below, C₂ and below or C₁.

In the above connection the stabilising composition of the invention is substantially free from diphenylamine and from lower alkylated diphenylamine antioxidants. For example, the stabilising composition is free from t-butylated diphenylamines.

The polymeric materials may be for example polyether polyols used in the production of polyurethanes, for example flexible and semiflexible polyurethane foams, or polyurethanes themselves.

In formula I, and provided that at least one of x and/or y is more than zero, x and y are preferably each independently from 0 to 4, more preferably from 0 to 3, still more preferably from 0 to 2, and most preferably 1. In some embodiments, x and y are the same, and may both be 1.

The hydrocarbyl groups may be aliphatic hydrocarbyl groups. Preferably the aliphatic hydrocarbyl groups are selected from alkyl, alkenyl and alkynyl, and may in each case be substituted with other functional groups, or contain other functional linkages, which may include heteroatoms.

More preferably, the hydrocarbyl groups are optionally substituted alkyl groups.

In this specification "alkyl" includes cycloalkyl and both straight and branched chain alkyl.

The or each hydrocarbyl group may comprise an alkaryl or aralkyl group and consequently may include or be substituted with one or more aryl groups, for example phenyl groups.

The stabilising composition of the invention is preferably substantially free from secondary or tertiary arylamines having vapour pressures above 0.03 Pa at 20°C. Diphenylamine for example has a vapour pressure of 0.033Pa at 20°C.

By "substantially free" we mean with respect to an individual component that that component is present (if at all) in an amount of less than 2% w/w, more preferably less than 1.5% w/w, still more preferably less than 1.0% w/w, yet more preferably less than 0.5% w/w, and most preferably less than 0.2% w/w of the stabilising composition. According to the present invention the total amount of any such components is less than 2% w/w, more preferably less than 1.5% w/w, still more preferably less than 1.0%, yet more preferably less than 0.5% w/w, and most preferably less than 0.2% w/w of the stabilising composition.

When only one R group is present on an aromatic ring in formula I, that R group is preferably provided in the position ortho or para to the amine linkage.

The upper limit to the number of carbon atoms in the hydrocarbyl group of the secondary arylamine of formula I depends on the requirement for the stabilising composition to be a liquid at ambient conditions and may depend on the practical availability of materials. One particularly preferred secondary arylamine contains two C₉ aliphatic hydrocarbyl groups, one on each aromatic ring, for example the nonylated diphenylamine.

Other secondary arylamines may be present in the blend of the invention but when present are preferably selected with regard to their volatility to avoid the aforementioned problem of fogging, and also to ensure that the stabilising composition is a liquid.

Without wishing to be bound by theory, it is believed that lower molecular weight and/or more volatile compounds may be responsible for fogging.

Many antioxidant products and indeed other additives are nominally referred to as a particular compound but often contain a mixture of compounds. For example, predominantly octylated diphenylamine products such as Irganox^{RTM} 5057 may also comprise other alkylated diphenylamine compounds including in particular di- and monobutylated diphenylamine, and it is thought that monobutylated diphenylamine in particular gives rise to fogging problems.

The presence of a range of compounds can be due to the preparation processes, for example as described in US 4,824,601.

The second essential component of the stabilising composition of the invention is a phenolic antioxidant.

The phenolic antioxidants provided in the stabilising composition of the invention are selected such that the stabilising composition is liquid at ambient conditions as described above. Often this will be achieved by selecting individual phenolic antioxidant components which are themselves liquid at ambient conditions.

Preferably the phenolic antioxidant comprises a phenol group which is substituted, preferably substituted twice, preferably at positions ortho to the - OH group in the phenol. The or each, but preferably both, substituents may comprise alkyl groups, of which branched chain alkyl groups and particularly t-butyl groups are preferred.

The phenolic antioxidant has a molecular weight of at least 390, at least about 400, at least about 410, at least about 420, at least about 430, at least about 440, at least about 450, at least about 460, at least about 470 or at least about 480.

The inventors of the present invention have found that by carefully selecting at least one phenolic antioxidant with a molecular weight as described above, an improved stabilising composition which is liquid at ambient conditions can be achieved. Preferably, the phenolic antioxidant is liquid at ambient conditions. By way of specific and non-limiting example, such phenolic antioxidants may for example be selected from one or more of 2,2'thiodiethylene bis[3(3,5-di-t-butyl-4-hydroxyphenyl)propionate] (Anox ^{RTM} 70 - CAS 41484-35-9); C13-C15 linear and branched alkyl esters of 3-(3'5'-di-t-butyl-4'-hydroxyphenyl) propionic acid (Anox^{RTM} 1315 - CAS 171090-93-0); 1,3,5-trimethyl-2,4,6-tris(3,5-di-t-butyl-4-hydroxybenzyl)benzene (Anox^{RTM} 330 - CAS 1709-70-2); C9-C11 linear and branched alkyl esters of 3-(3',5'-di-t-butyl-4'-hydroxyphenyl)propionic acid (Naugard^{RTM} PS48 - CAS 125643-61-0);triethyleneglycol-bis-[3-(3-t-butyl-4-hydroxy-5-methylphenyl)propionate] (Lowinox^{RTM} GP45 - CAS 36443-68-2); alpha-tocopherol; and/or compatible mixtures of two or more thereof.

However, the phenolic antioxidant may not necessarily comprise a single material but may instead itself comprise a suitable blend of materials. In that case it may be possible to include in the blend one or more phenolic antioxidants which are not themselves liquid at ambient conditions but which nevertheless may be blended with one or more other compatible liquid antioxidants to yield a blend which is itself liquid at ambient conditions. Again, it may be preferable for such phenolic antioxidants to have a molecular weight of at least 390. Specific, non-limiting examples of such phenolic antioxidants include tetrakismethylene(3,5-di-t-butyl-4-hydroxy hydrocinnamate) methane (Anox^{RTM} 20 - CAS 6683-19-8); octadecyl 3-(3',5'-di-t-butyl-4'-hydroxyphenyl) propionate (Anox^{RTM} PP18 - CAS 2082-79-3); 1,3,5-tris(3,5-di-t-butyl-4-hydroxybenzyl) isocyanurate (Anox^{RTM} IC14 - CAS 27676-62-6); N,N'-hexamethylene bis[3-(3,5-di-t-butyl-4-hydroxyphenyl)propionamide] (Lowinox^{RTM} HD98 - CAS 23128-74-7); 1,2-bis(3,5-di-t-butyl-4-hydroxyhydrocinnamoyl)hydrazine (Lowinox^{RTM} MD24 - CAS 32687-78-8); the butylated reaction product of p-cresol and dicyclopentadiene (Lowinox^{RTM} CPL - CAS 68610-51-5); 2,2'-ethylidenebis[4,6-di-t-butylphenol] (Anox^{RTM} 29 - CAS 35958-30-6); and/or compatible mixtures of two or more thereof.

One particularly preferred phenolic antioxidant comprises C13-C15 linear and branched alkyl esters of 3-(3'5'-di-t-butyl-4'-hydroxyphenyl) propionic acid (Anox^{RTM} 1315 - CAS 171090-93-0).

The phenolic antioxidant may additionally or alternatively comprise one or more phenolic antioxidants with a lower molecular weight than those described above i.e. a molecular weight of less than 390. As has been emphasised, the antioxidants provided in the stabilising composition of the invention are selected to provide liquid blends at ambient conditions. Often this will be achieved by selecting individual antioxidant components which are themselves liquid at ambient conditions. By way of specific and non-limiting examples, such antioxidants may comprise: 2-(1,1-dimethylethyl)-4,6-dimethyl-phenol (Lowinox^{RTM} 624 - CAS 1879-09-0); 2-tert-butyl-5-methylphenol; and/or compatible mixtures thereof.

It may be possible to include in the blend one or more phenolic antioxidants with a molecular weight of less than 390, which are not themselves liquid at ambient conditions but which nevertheless may be blended with one or more other compatible liquid antioxidants to yield a blend which is itself liquid at ambient conditions. Specific, non-limiting examples of such materials include: 2,2'methylenebis(6-t-butyl-4-methylphenol) (Lowinox^{RTM} 22M46 - CAS 119-47-1), butylated hydroxytoluene (BHT - CAS 128-37-0), 4,6-di-tert-butyl-2-methylphenol, 6-tert-butyl-2-methylphenol, 2-tert-butyl-4-methylphenol, 2-tert-butyl-5-methylphenol, 2,4-di-tert-butylphenol, 2,4-di-tert-pentylphenol, 4-tert-pentyphenol, and 2,6-xylenol (which may be less preferred owing to its toxicity).

According to a second aspect of the present invention there is provided a composition comprising a polyol and the above-mentioned stabilising composition.

According to a third aspect of the present invention there is provided a composition comprising a polyurethane and the above-mentioned stabilising composition.

According to a fourth aspect of the present invention there is provided a process comprising incorporating or applying the above mentioned stabilising composition to a polyurethane or a polyol.

According to a fifth aspect of the present invention there is provided a process for producing a polyurethane, comprising adding the above-mentioned stabilising composition to a polyol and subsequently reacting with isocyanate to form a polyurethane.

According to a sixth aspect of the present invention there is provided the use of the above-mentioned stabilising composition for stabilising a polyol or polyurethane.

The stabilisation may be against oxidative, thermal and/or radiation (e.g. light, e.g. UV light) induced degradation.

The invention will now be more particularly described with reference to the following non-limiting examples.

### Examples

Table 1 outlines details relating to different stabilising components. Hereinafter, the stabilising components will simply be referred to using the name given in the 'component' column.

**Table 1**

| **Component** | **CAS No.** | **Description** |
|---|---|---|
| Anox^{RTM} 1315 | 171090-93-0 | C13-C15 linear and branched alkyl esters of 3-(3'-5'-di-t-butyl-4'-hydroxylphenyl)propionic acid |
| Anox^{RTM} 20 | 6683-19-8 | Tetrakismethylene(3,5-di-t-butyl-4-hydroxyhydrocinnamate)methane |
| Naugard ^{RTM} PS48 | 125643-61-0 | C7-C9 branched alkyl ester of 3,5-di-tert-butyl-4-hydroxyhydrocinnamic acid |
| Naugard ^{RTM} PS30 | 68411-46-1 | Diphenylamine C4/C8 reaction product |
| NL438L | 36878-20-3 | Diphenylamine C9 reaction product |

### Examples 1 to 3

Differential Scanning Calorimetry (DSC) analysis was carried out on three polyether polyol samples. The polyether polyol was commercially available and had an average molecular weight of 3500 and a hydroxyl number of 48 mg KOH/g.

The first sample acted as a control and had no stabilising components added thereto (Example 1). The second sample had 0.6% w/w of a stabilising composition formed from Anox^{RTM} 1315 and NL438L in a ratio of 2:1 added thereto (Example 2). The third sample had 0.6% w/w of a stabilising composition formed from Naugard^{RTM} PS48 and Naugard^{RTM} PS30 in a ratio of 2:1 added thereto and acted as a comparative example (Example 3).

Differential Scanning Calorimetry (DSC) was used to measure the oxidation onset temperature for each of the samples. The results are shown in Table 2.

**Table 2**

| **Example** | **Oxidation Temperature (°C)** |
|---|---|
| **1** | 144 |
| **2** | 206 |
| **3** | 207 |

It can be seen from the results that the stabilising composition according to the present invention dramatically improves the polyether polyol stability against oxidative degradation compared to the polyether polyol without any stabilising composition, and is directly comparable (within experimental error) to the polyether polyol with lower alkyl reaction products of diphenylamine.

### Examples 4 to 6

Three polyurethane foam samples were formed in a 25 cm x 25 cm x 25 cm box. Each polyurethane foam sample had the composition outlined in Table 3.

**Table 3**

| **Component** | **Parts** |
|---|---|
| Polyether polyol | 100.00 |
| Silicone | 0.75 |
| Tin catalyst | 0.25 |
| Amine catalyst | 0.20 |
| TDI 80 | 78.55 |
| Water | 6.00 |

The first foam sample acted as a control and had no stabilising components added thereto (Example 4). The second foam sample had 0.6% w/w of a stabilising composition formed from Anox^{RTM} 1315 and NL438L in a ratio of 2:1 added thereto (Example 5). The third foam sample had 0.6% w/w of a stabilising composition formed from Naugard^{RTM} PS48 and Naugard^{RTM} PS30 in a ratio of 2:1 added thereto and acted as a comparative example (Example 6).

Colour change or development of the samples was measured by heating each sample in an oven at 180°C for 60 minutes and then measuring Yellowness Index (YI) according to ASTM D1925. The results are shown in Table 4.

**Table 4**

| **Example** | **Yellowness Index** |
|---|---|
| **4** | 53.8 |
| **5** | 4.3 |
| **6** | 5.3 |

From the results it can clearly be seen that the stabilising composition according to the present invention dramatically reduces the colour change of the polyurethane foam compared to non-stabilised compositions. Additionally, it can be seen that the stabilising composition according to the present invention significantly reduces the colour degradation of the polyurethane foam compared to that stabilised by the composition formed from Naugard^{RTM} PS48 and Naugard^{RTM} PS30.

### Examples 7 and 8

Microwave scorch data was measured for two polyurethane foam samples having the composition outlined in Table 3. The first foam sample had 0.6% w/w of a stabilising composition formed from Anox^{RTM} 1315 and NL438L in a ratio of 2:1 added thereto (Example 7). The second foam sample had 0.6% w/w of a stabilising composition formed from Naugard^{RTM} PS48 and Naugard^{RTM} PS30 in a ratio of 2:1 added thereto and acted as a comparative example (Example 8).

The microwave scorch data was measured as delta E, according to the standard test method ASTM D1925. The results are shown in Table 5.

**Table 5**

| **Example** | **Delta E** |
|---|---|
| 7 | 32.2 |
| 8 | 31.8 |

### Examples 9 to 11

The amount of volatile organic compounds (VOCs) was measured for three polyurethane foam samples having the composition outlined in Table 3. The first foam sample acted as a control and had no stabilising components added thereto (Example 9). The second foam sample had 0.6% w/w of a stabilising composition formed from Anox^{RTM} 1315 and NL438L in a ratio of 2:1 added thereto (Example 10). The third foam sample had 0.6% w/w of a stabilising composition formed from Naugard^{RTM} PS48 and Naugard^{RTM} PS30 in a ratio of 2:1 added thereto and acted as a comparative example (Example 11).

The amount of VOCs was measured according to standard test method VDA 278. And emission causing fogging was quantified. The results are shown in Table 6.

**Table 6**

| **Example** | **VOC (ppm)** | **FOG (ppm)** |
|---|---|---|
| 9 | 58 | 32 |
| 10 | 48 | 32 |
| 11 | 101 | 216 |

From the results it can be seen that the stabilising composition according to the present invention (Example 10) dramatically reduces the amount of VOC and FOG in the polyurethane foam compared to the stabilising composition formed from Naugard ^{RTM} PS48 and Naugard^{RTM} PS30 (Example 11).

### Examples 12 to 17

An investigation into the physical properties of a stabilising composition according to the present invention compared to those of a current commercial stabilising composition was carried out.

A sample of a stabilising composition formed from Anox^{RTM} 1315 and NL438L in a ratio of 2:1 was prepared (Example 12). As a comparative example, a composition formed from Naugard ^{RTM} PS48 and Naugard^{RTM} PS30 was used (Example 13).

The viscosity of each of the samples was tested at temperatures ranging from 10°C to 30°C.

The results are shown in Table 7.

**Table 7**

| **Temperature (°C)** | **Viscosity (cPs)** | **Viscosity (cPs)** |
|---|---|---|
| | **Example 12** | **Example 13** |
| **10** | 2896 | 6336 |
| **15** | 1610 | 2925 |
| **20** | 941 | 1478 |
| **30** | 368 | 447 |

From the results it can be seen that the stabilising composition according to the present invention (Example 12) exhibited lower viscosities at all temperatures tested, compared to the current commercial stabilising composition (Example 13). This suggests that the stabilising composition according to the present invention would be easier to handle in plant, particularly at lower temperatures.

A sample of a stabilising composition formed from Anox^{RTM} 1315 and NL438L in a ratio of 2:1 was prepared (Example 14). As a comparative example, composition formed from Naugard ^{RTM} PS48 and Naugard^{RTM} PS30 (Example 15). Each of the stabilising compositions were tested to determine their 'pour point'. The pour point of a liquid may be defined as the temperature at which the liquid becomes a semi-solid and thus, loses its flow characteristics.

The pour points were determined using standard test method ISO3016. The results are shown in Table 8.

**Table 8**

| **Example** | **Pour Point (°C)** |
|---|---|
| 14 | - 6 |
| 15 | 0 |

From the results it can be seen that the stabilising composition according to the present invention (Example 14) remains pourable to a lower temperature compared to the current commercial stabilising composition (Example 15). This may suggest that the stabilising composition according to the present invention would be easier to handle in plant.

A sample of a stabilising composition formed from Anox^{RTM} 1315 and NL438L in a ratio of 2:1 was prepared (Example 16). As a comparative example, composition formed from Naugard ^{RTM} PS48 and Naugard^{RTM} PS30 (Example 17). Each of the stabilising compositions were subjected to thermal gravimetric analysis (TGA). The results are shown in Table 9.

**Table 9**

| | **Example 16** | **Example 17** |
|---|---|---|
| **Atmosphere** | **N₂** | **N₂** |
| Temp at 5% weight loss (°C) | 254 | 218 |
| Temp at 10% weight loss (°C) | 280 | 240 |
| Temp at 20% weight loss (°C) | 304 | 261 |
| Temp at 50% weight loss (°C) | 335 | 290 |

From the results it can be seen that the stabilising composition according to the present invention (Example 16) is stable to higher temperatures than the current commercial stabilising composition (Example 17).

### Examples 18 to 20

Three low density polyurethane foam samples were formed in a 25 cm x 25 cm x 25 cm box. Each of the polyurethane foam samples had the composition outlined in Table 3 and had a density of about 20 kg/m³.

The first foam sample acted as a control and had no stabilising components added thereto (Example 18). The second foam sample had 0.6% w/w of a stabilising composition formed from Anox^{RTM} 1315 and NL438L in a ratio of 2:1 added thereto (Example 19). The third foam sample had 0.6% w/w of a stabilising composition formed from composition formed from Naugard ^{RTM} PS48 and Naugard^{RTM} PS30 added thereto, and acted as a comparative example (Example 20).

The amount of volatile organic compounds (VOCs) attributed to the stabilizing compositions were measured for each of the polyurethane foam samples. The amount of VOCs and FOG were measured according to standard test method VDA 278. The results are shown in Table 11.

**Table 11**

| **Example** | **VOC (ppm)** | **FOG (ppm)** |
|---|---|---|
| 18 | 0 | 0 |
| 19 | 0 | 0 |
| 20 | 43 | 184 |

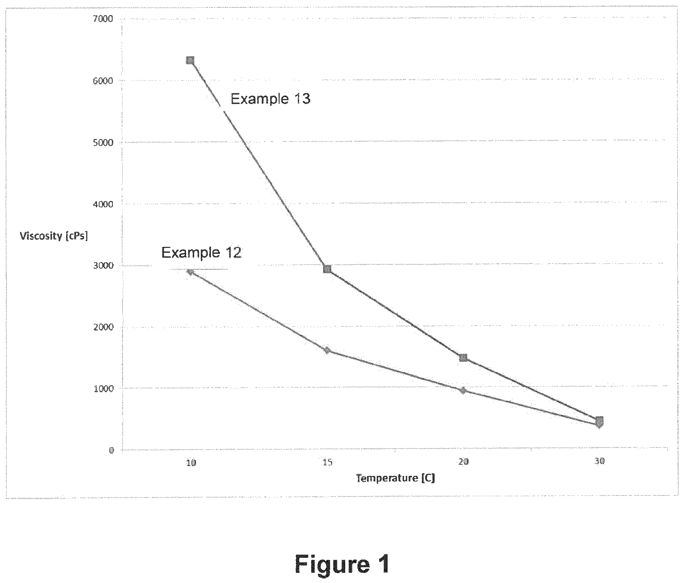

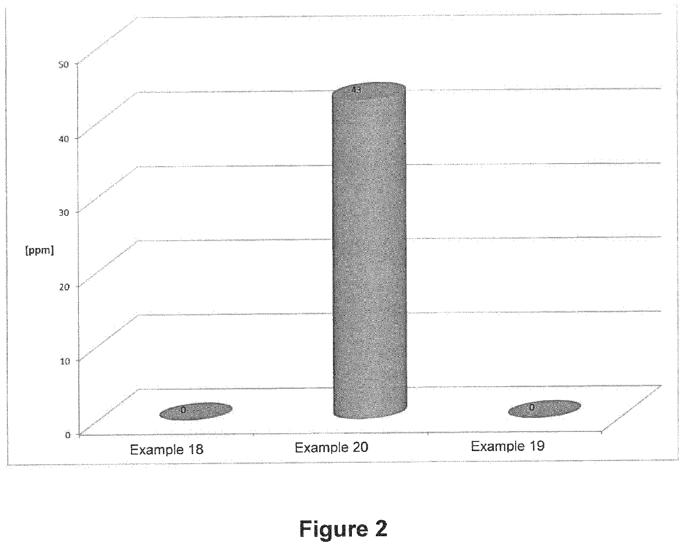

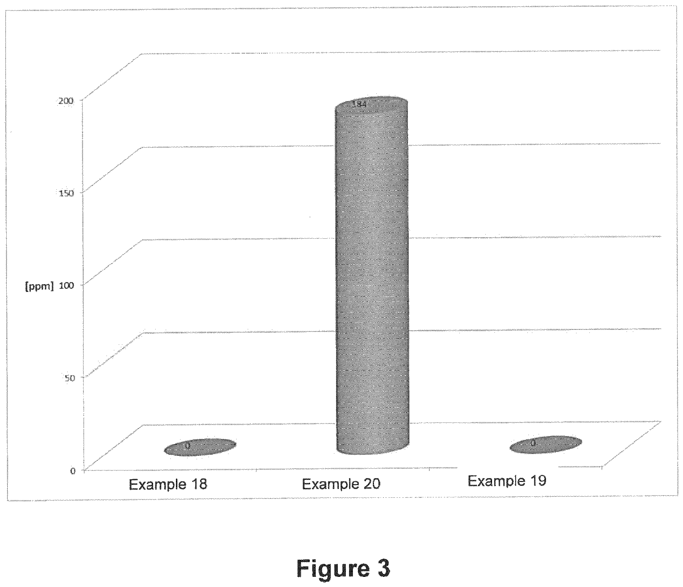

The VOC results are graphically represented in Figure 2 and the FOG results are graphically represented in Figure 3.

From the results it can be seen that the stabilising composition according to the present invention (Example 19) provides no detectable contribution to VOC or FOG. Conversely, the current commercial stabilising composition (Example 20) significantly increases the VOC and FOG of the polyurethane foam.

### Examples 21 and 22

Two high density polyurethane foam samples were formed with reduced amounts of water (see table 3) for making polyurethane foam with density of 40 kg/m³.

The first foam sample had 0.4% w/w of a stabilising composition formed from Anox^{RTM} 1315 and NL438L in a ratio of 2:1 added thereto (Example 21). The second foam sample had 0.4% w/w of a stabilising composition formed from Naugard ^{RTM} PS48 and Naugard^{RTM} PS30 added thereto, and acted as a comparative example (Example 22).

The amount of volatile organic compounds (VOCs) and Fogging attributed to the stabilizing compositions were measured for each of the polyurethane foam samples according to standard test method VDA 278. The results are shown in Table 13.

**Table 13**

| **Example** | **VOC (ppm)** | **FOG (ppm)** |
|---|---|---|
| 21 | 1 | 92 |
| 22 | 36 | 685 |

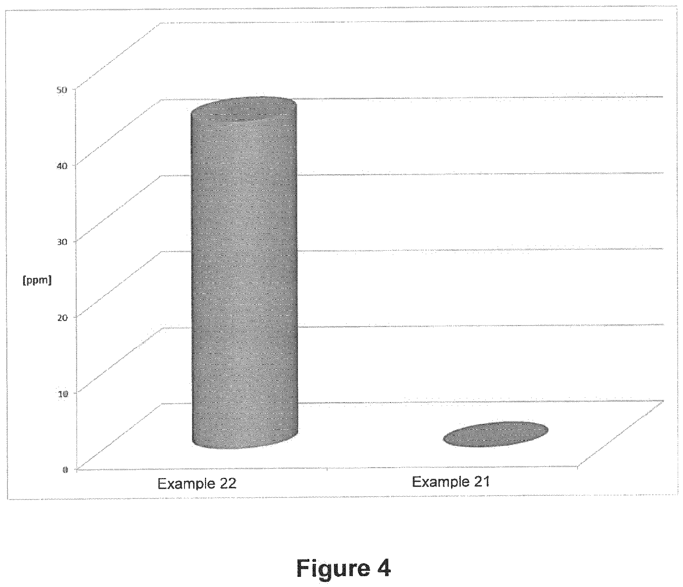

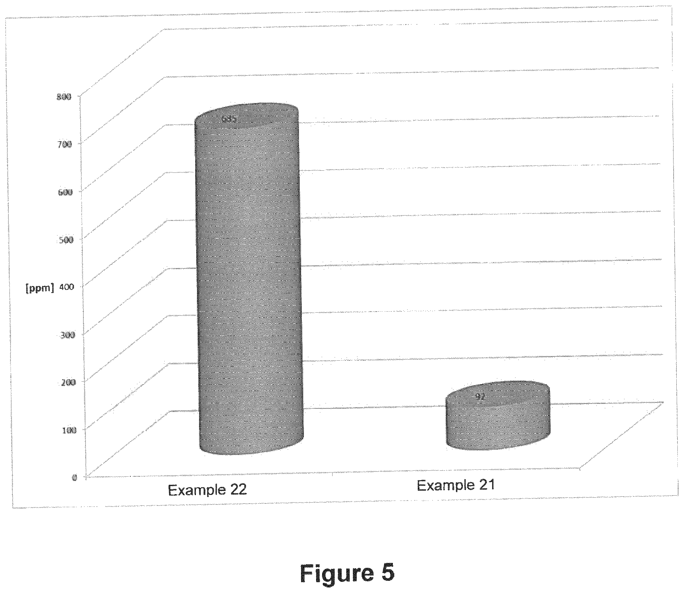

The VOC results are graphically represented in Figure 4 and the FOG results are graphically represented in Figure 5.

From the results it can be seen that the stabilising composition according to the present invention (Example 21) has significantly lower VOC and FOG values compared to the current commercial stabilising composition (Example 22).

## Claims

1. Use of a stabilising composition for stabilising a polyol or polyurethane, the stabilising composition comprising:
at least one secondary arylamine having the formula I: 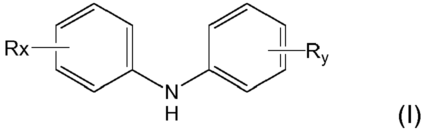 wherein:
the or each R, which may be the same or different, independently denotes an optionally substituted hydrocarbyl group having at least 5 carbon atoms;
x and y are each independently from 0 to 5 provided that at least one of x and y is at least 1; and
a phenolic antioxidant having a molecular weight of at least 390,
both the stabilising composition and the secondary arylamine being a liquid at 25°C and atmospheric pressure of 101.325 kPa, and being substantially free from diphenylamine and from lower alkylated diphenylamine antioxidants.

2. The use according to Claim 1, wherein the optionally substituted hydrocarbyl group has at least 6 carbon atoms, at least 7 carbon atoms, at least 8 carbon atoms or at least 9 carbon atoms.

3. The use according to Claim 1 or Claim 2, wherein at least one of x and/or y is more than zero, and wherein x and y are each independently:
a. from 0 to 4;
b. from 0 to 3;
c. from 0 to 2;
d. 1.

4. The use according to Claim 3, wherein x and y are the same, optionally wherein x and y are both 1.

5. The use according to any one of claims 1 to 4, wherein the stabilising composition is free from t-butylated diphenylamines.

6. The use according to any one of claims 1 to 5, wherein the hydrocarbyl group(s) is or are aliphatic hydrocarbyl groups, optionally
wherein the aliphatic hydrocarbyl group(s) is or are selected from alkyl, alkenyl and alkynyl, optionally in each case substituted with other functional groups, or contain other functional linkages, which optionally include heteroatoms, optionally
wherein the aliphatic hydrocarbyl group(s) is or are selected from optionally substituted alkyl groups.

7. The use according to any one of claims 1 to 5, wherein the or each hydrocarbyl group comprises an aralkyl or an alkaryl group.

8. The use according to any one of claims 1 to 7, wherein the stabilising composition is substantially free from secondary or tertiary arylamines having vapour pressures above 0.03 Pa at 20°C; and/or
wherein "substantially free" denotes with respect to an individual component that that component is present (if at all) in an amount of:
b. less than 1.5% w/w;
c. less than 1.0%;
d. less than 0.5% w/w; or
e. less than 0.2% w/w
of the stabilising composition, optionally
wherein the total amount of any such individual components present in the composition is:
g. less than 1.5% w/w;
h. less than 1.0%;
i. less than 0.5% w/w; or
j. than 0.2% w/w of the stabilising composition.

9. The use according to any one of claims 1 to 8, wherein the phenolic antioxidant has a molecular weight of:
a. at least 400;
b. at least 410;
c. at least 420;
d. at least 430;
e. at least 440;
f. at least 450;
g. at least 460;
h. at least 470; or
i. at least 480; and/or
wherein the phenolic antioxidant comprises a phenol group which is substituted, optionally substituted twice, optionally in that case at positions ortho to the -OH group in the phenol, optionally wherein the or each substituent comprises an alkyl groups, optionally a branched chain alkyl group, optionally t-butyl.

10. A stabilised composition comprising a polyol and a stabilising composition comprising:
at least one secondary arylamine having the formula I: 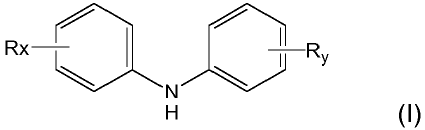 wherein:
the or each R, which may be the same or different, independently denotes an optionally substituted hydrocarbyl group having at least 5 carbon atoms;
x and y are each independently from 0 to 5 provided that at least one of x and y is at least 1; and
a phenolic antioxidant having a molecular weight of at least 390,
both the stabilising composition and the secondary arylamine being a liquid at 25°C and atmospheric pressure of 101.325 kPa, and being substantially free from diphenylamine and from lower alkylated diphenylamine antioxidants.

11. A stabilised composition comprising a polyurethane and a stabilising composition comprising:
at least one secondary arylamine having the formula I: 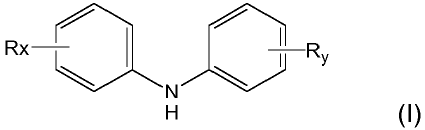 wherein:
the or each R, which may be the same or different, independently denotes an optionally substituted hydrocarbyl group having at least 5 carbon atoms;
x and y are each independently from 0 to 5 provided that at least one of x and y is at least 1; and
a phenolic antioxidant having a molecular weight of at least 390,
both the stabilising composition and the secondary arylamine being a liquid at 25°C and atmospheric pressure of 101.325 kPa, and being substantially free from diphenylamine and from lower alkylated diphenylamine antioxidants.

12. An article comprising the stabilised composition of claim 10 or claim 11.

13. A process for stabilising a polymeric composition, comprising incorporating or applying a stabilising composition to a polyurethane or polyol, the stabilising composition comprising:
at least one secondary arylamine having the formula I: 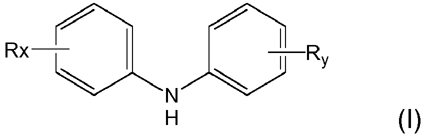 wherein:
the or each R, which may be the same or different, independently denotes an optionally substituted hydrocarbyl group having at least 5 carbon atoms;
x and y are each independently from 0 to 5 provided that at least one of x and y is at least 1; and
a phenolic antioxidant having a molecular weight of at least 390,
both the stabilising composition and the secondary arylamine being a liquid at 25°C and atmospheric pressure of 101.325 kPa, and being substantially free from diphenylamine and from lower alkylated diphenylamine antioxidants.

14. A process for producing a polyurethane, comprising adding a stabilising composition to a polyol and subsequently reacting with isocyanate to form a polyurethane, the stabilising composition comprising:
at least one secondary arylamine having the formula I: 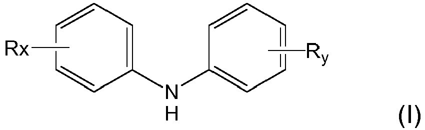 wherein:
the or each R, which may be the same or different, independently denotes an optionally substituted hydrocarbyl group having at least 5 carbon atoms;
x and y are each independently from 0 to 5 provided that at least one of x and y is at least 1; and
a phenolic antioxidant having a molecular weight of at least 390,
both the stabilising composition and the secondary arylamine being a liquid at 25°C and atmospheric pressure of 101.325 kPa, and being substantially free from diphenylamine and from lower alkylated diphenylamine antioxidants.

## Patentansprüche

1. Verwendung einer stabilisierenden Zusammensetzung zum Stabilisieren eines Polyols oder Polyurethans, wobei die stabilisierende Zusammensetzung umfasst:
zumindest ein sekundäres Arylamin mit der Formel I: 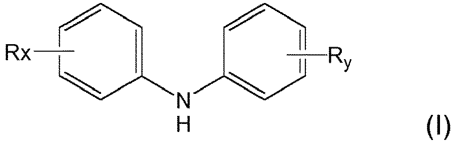 wobei:
das oder jedes R, die gleich oder unterschiedlich sein können, unabhängig voneinander eine optional substituierte Hydrocarbyl-Gruppe mit zumindest 5 Kohlenstoffatomen bezeichnet;
x und y jeweils unabhängig voneinander 0 bis 5 sind, mit der Maßgabe, dass zumindest eines von x und y zumindest 1 ist; und
ein phenolisches Antioxidans mit einem Molekulargewicht von zumindest 390,
wobei sowohl die stabilisierende Zusammensetzung als auch das sekundäre Arylamin bei 25 °C und einem atmosphärischen Druck von 101,325 kPa eine Flüssigkeit sind, und im Wesentlichen frei von Diphenylamin und von niedrig alkylierten Diphenylamin-Antioxidantien sind.

2. Verwendung nach Anspruch 1, wobei die optional substituierte Hydrocarbyl-Gruppe zumindest 6 Kohlenstoffatome, zumindest 7 Kohlenstoffatome, zumindest 8 Kohlenstoffatome oder zumindest 9 Kohlenstoffatome aufweist.

3. Verwendung nach Anspruch 1 oder Anspruch 2, wobei zumindest eines von x und/oder y größer als null ist, und wobei x und y jeweils unabhängig voneinander sind:
a. von 0 bis 4;
b. von 0 bis 3;
c. von 0 bis 2;
d. 1.

4. Verwendung nach Anspruch 3, wobei x und y gleich sind, wobei x und y optional beide 1 sind.

5. Verwendung nach einem der Ansprüche 1 bis 4, wobei die stabilisierende Zusammensetzung frei von t-butylierten Diphenylaminen sind.

6. Verwendung nach einem der Ansprüche 1 bis 5, wobei die Hydrocarbyl-Gruppe(n) aliphatische Hydrocarbyl-Gruppen ist oder sind, wobei optional die aliphatische(n) Hydrocarbyl-Gruppe(n) aus Alkyl, Alkenyl und Alkynyl ausgewählt ist oder sind, optional jeweils mit anderen funktionellen Gruppen substituiert, oder andere funktionelle Verknüpfungen enthaltend, die optional Heteroatome einschließen,
wobei die aliphatische (n) Hydrocarbyl-Gruppe (n) optional aus optional substituierten Alkyl-Gruppen ausgewählt ist oder sind.

7. Verwendung nach einem der Ansprüche 1 bis 5, wobei die oder jede Hydrocarbyl-Gruppe eine Aralkyl- oder eine AlkarylGruppe umfasst.

8. Verwendung nach einem der Ansprüche 1 bis 7, wobei die stabilisierende Zusammensetzung im Wesentlichen frei von sekundären oder tertiären Arylaminen ist, die Dampfdrücke von mehr als 0,03 Pa bei 20 °C aufweisen; und/oder
wobei "im Wesentlichen frei" in Bezug auf eine individuelle Komponente bedeutet, dass die Komponente (sofern überhaupt) nur in einer Menge von:
b. weniger als 1,5 Gew.-%;
c. weniger als 1,0 %;
d. weniger als 0,5 Gew.-%; oder
e. weniger als 0,2 Gew.-%
der stabilisierenden Zusammensetzung vorliegt,
wobei optional die Gesamtmenge jeglicher solcher individuellen Komponenten, die in der Zusammensetzung vorliegen:
g. weniger als 1,5 Gew.-%;
h. weniger als 1,0 %;
i. weniger als 0,5 Gew.-%; oder
j. weniger als 0,2 Gew.-%
der stabilisierenden Zusammensetzung beträgt.

9. Verwendung nach einem der Ansprüche 1 bis 8, wobei das phenolische Antioxidans ein Molekulargewicht von:
a. zumindest 400;
b. zumindest 410;
c. zumindest 420;
d. zumindest 430;
e. zumindest 440;
f. zumindest 450;
g. zumindest 460;
h. zumindest 470; oder
i. zumindest 480; aufweist, und/oder
wobei das phenolische Antioxidans eine Phenol-Gruppe umfasst, die substituiert, optional zweimal substituiert ist, wobei es in letzterem Fall optional an Ortho-Positionen in Bezug auf die OH-Gruppe in dem Phenol substituiert ist, wobei optional die oder jede Substituente eine Alkyl-Gruppe, optional eine Alkyl-Gruppe mit verzweigter Kette, optional t-Butyl, umfasst.

10. Stabilisierte Zusammensetzung umfassend ein Polyol und eine stabilisierende Zusammensetzung, umfassend:
zumindest ein sekundäres Arylamin mit der Formel I: 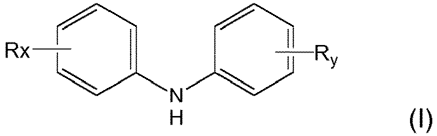 wobei:
das oder jedes R, die gleich oder unterschiedlich sein können, unabhängig voneinander eine optional substituierte Hydrocarbyl-Gruppe mit zumindest 5 Kohlenstoffatomen bezeichnet;
x und y jeweils unabhängig voneinander 0 bis 5 sind, mit der Maßgabe, dass zumindest eines von x und y zumindest 1 ist; und
ein phenolisches Antioxidans mit einem Molekulargewicht von zumindest 390,
wobei sowohl die stabilisierende Zusammensetzung als auch das sekundäre Arylamin bei 25 °C und einem atmosphärischen Druck von 101,325 kPa eine Flüssigkeit sind, und im Wesentlichen frei von Diphenylamin und von niedrig alkylierten Diphenylamin-Antioxidantien sind.

11. Stabilisierte Zusammensetzung umfassend ein Polyurethan und eine stabilisierende Zusammensetzung, umfassend:
zumindest ein sekundäres Arylamin mit der Formel I: 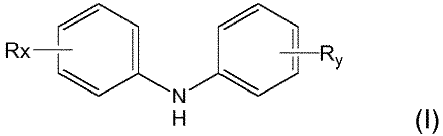 wobei:
das oder jedes R, die gleich oder unterschiedlich sein können, unabhängig voneinander eine optional substituierte Hydrocarbyl-Gruppe mit zumindest 5 Kohlenstoffatomen bezeichnet;
x und y jeweils unabhängig voneinander 0 bis 5 sind, mit der Maßgabe, dass zumindest eines von x und y zumindest 1 ist; und
ein phenolisches Antioxidans mit einem Molekulargewicht von zumindest 390,
wobei sowohl die stabilisierende Zusammensetzung als auch das sekundäre Arylamin bei 25 °C und einem atmosphärischen Druck von 101,325 kPa eine Flüssigkeit sind, und im Wesentlichen frei von Diphenylamin und von niedrig alkylierten Diphenylamin-Antioxidantien sind.

12. Gegenstand umfassend die stabilisierte Zusammensetzung nach Anspruch 10 oder Anspruch 11.

13. Verfahren zum Stabilisieren einer PolymerZusammensetzung, umfassend das Einbeziehen oder Auftragen einer stabilisierenden Zusammensetzung auf ein Polyurethan oder Polyol, wobei die stabilisierende Zusammensetzung umfasst:
zumindest ein sekundäres Arylamin mit der Formel I: 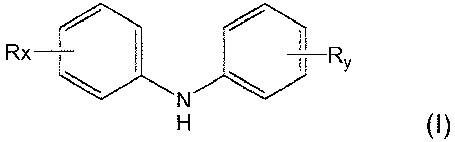 wobei:
das oder jedes R, die gleich oder unterschiedlich sein können, unabhängig voneinander eine optional substituierte Hydrocarbyl-Gruppe mit zumindest 5 Kohlenstoffatomen bezeichnet;
x und y jeweils unabhängig voneinander 0 bis 5 sind, mit der Maßgabe, dass zumindest eines von x und y zumindest 1 ist; und
ein phenolisches Antioxidans mit einem Molekulargewicht von zumindest 390,
wobei sowohl die stabilisierende Zusammensetzung als auch das sekundäre Arylamin bei 25 °C und einem atmosphärischen Druck von 101,325 kPa eine Flüssigkeit sind, und im Wesentlichen frei von Diphenylamin und von niedrig alkylierten Diphenylamin-Antioxidantien sind.

14. Verfahren zur Herstellung eines Polyurethans, umfassend das Zugeben einer stabilisierenden Zusammensetzung zu einem Polyol und in der Folge Umsetzen mit Isocyanat, um ein Polyurethan zu bilden, wobei die stabilisierende Zusammensetzung umfasst:
zumindest ein sekundäres Arylamin mit der Formel I: 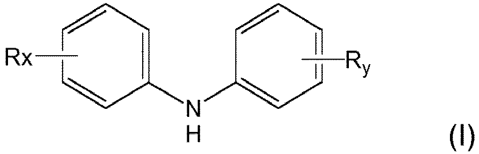 wobei:
das oder jedes R, die gleich oder unterschiedlich sein können, unabhängig voneinander eine optional substituierte Hydrocarbyl-Gruppe mit zumindest 5 Kohlenstoffatomen bezeichnet;
x und y jeweils unabhängig voneinander 0 bis 5 sind, mit der Maßgabe, dass zumindest eines von x und y zumindest 1 ist; und
ein phenolisches Antioxidans mit einem Molekulargewicht von zumindest 390,
wobei sowohl die stabilisierende Zusammensetzung als auch das sekundäre Arylamin bei 25 °C und einem atmosphärischen Druck von 101,325 kPa eine Flüssigkeit sind, und im Wesentlichen frei von Diphenylamin und von niedrig alkylierten Diphenylamin-Antioxidantien sind.

## Revendications

1. Utilisation d'une composition stabilisante pour stabiliser un polyol ou un polyuréthane, la composition stabilisante comprenant :
au moins une arylamine secondaire ayant la formule I : 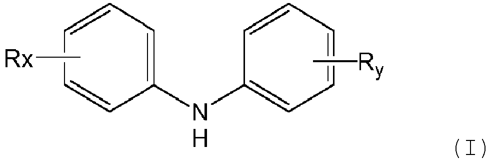 dans laquelle :
R ou chaque R, qui peuvent être identiques ou différents, indique indépendamment un groupe hydrocarbyle éventuellement substitué ayant au moins 5 atomes de carbone ;
x et y sont chacun indépendamment compris entre 0 et 5 à condition qu'au moins l'un de x et de y soit au moins égal à 1 ; et
un antioxydant phénolique ayant un poids moléculaire d'au moins 390,
la composition stabilisante et l'arylamine secondaire étant toutes les deux un liquide à 25°C et à une pression atmosphérique de 101,325 kPa, et étant sensiblement exemptes de diphénylamine et d'antioxydants de diphénylamine substituée par des alkyles inférieurs.

2. Utilisation selon la revendication 1, dans laquelle le groupe hydrocarbyle éventuellement substitué a au moins 6 atomes de carbone, au moins 7 atomes de carbone, au moins 8 atomes de carbone ou au moins 9 atomes de carbone.

3. Utilisation selon la revendication 1 ou 2, dans laquelle au moins l'un de x et y est supérieur à zéro, et dans laquelle x et y sont chacun indépendamment :
a. compris entre 0 et 4 ;
b. compris entre 0 et 3 ;
c. compris entre 0 et 2 ;
d. égaux à 1.

4. Utilisation selon la revendication 3, dans laquelle x et y sont identiques, éventuellement dans laquelle x et y sont tous deux égaux à 1.

5. Utilisation selon l'une quelconque des revendications 1 à 4, dans laquelle la composition stabilisante est exempte de diphénylamines t-butylées.

6. Utilisation selon l'une quelconque des revendications 1 à 5, dans laquelle le ou les groupe (s) hydrocarbyle est/sont des groupes hydrocarbyle aliphatiques, éventuellement
dans laquelle le ou les groupe (s) hydrocarbyle aliphatique(s) est/sont choisi(s) parmi un alkyle, un alcényle et un alcynyle, éventuellement substitués, dans chaque cas, par d'autres groupes fonctionnels, ou contiennent d'autres liaisons fonctionnelles, qui comportent éventuellement des hétéroatomes, éventuellement
dans laquelle le ou les groupe(s) hydrocarbyle aliphatique(s) est/sont choisi (s) parmi des groupes alkyle éventuellement substitués.

7. Utilisation selon l'une quelconque des revendications 1 à 5, dans laquelle le groupe hydrocarbyle ou chaque groupe hydrocarbyle comprend un groupe aralkyle ou alkaryle.

8. Utilisation selon l'une quelconque des revendications 1 à 7, dans laquelle la composition stabilisante est sensiblement exempte d'arylamines secondaires ou tertiaires ayant des pressions de vapeur supérieures à 0,03 Pa à 20°C ; et/ou
dans laquelle « substantiellement exempte » indique, par rapport à un composant individuel, que ce composant est présent (le cas échéant) en une quantité :
b. inférieure à 1,5% p/p ;
c. inférieure à 1,0% ;
d. inférieure à 0,5% p/p ; ou
e. inférieure à 0,2% p/p
de la composition stabilisante, éventuellement
dans laquelle la quantité totale de tels composants individuels quelconques présents dans la composition est :
g. inférieure à 1,5% p/p ;
h. inférieure à 1,0% ;
i. inférieure à 0,5% p/p ; ou
j. inférieure à 0,2% p/p
de la composition stabilisante.

9. Utilisation selon l'une quelconque des revendications 1 à 8, dans laquelle l'antioxydant phénolique a un poids moléculaire :
a. d'au moins 400 ;
b. d'au moins 410 ;
c. d'au moins 420 ;
d. d'au moins 430 ;
e. d'au moins 440 ;
f. d'au moins 450 ;
g. d'au moins 460 ;
h. d'au moins 470 ; ou
i. d'au moins 480 ; et/ou
dans laquelle l'antioxydant phénolique comprend un groupe phénol qui est substitué, éventuellement substitué deux fois, éventuellement dans ce cas aux positions ortho par rapport au groupe -OH dans le phénol, où éventuellement le substituant ou chaque substituant comprend un alkyle, éventuellement un groupe alkyle à chaîne ramifiée, éventuellement un t-butyle.

10. Composition stabilisée comprenant un polyol et une composition stabilisante comprenant :
au moins une arylamine secondaire ayant la formule I : 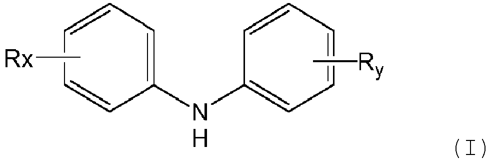 dans laquelle :
R ou chaque R, qui peuvent être identiques ou différents, indique indépendamment un groupe hydrocarbyle éventuellement substitué ayant au moins 5 atomes de carbone ;
x et y sont chacun indépendamment compris entre 0 et 5 à condition qu'au moins l'un de x et de y soit au moins égal à 1 ; et
un antioxydant phénolique ayant un poids moléculaire d'au moins 390,
la composition stabilisante et l'arylamine secondaire étant toutes les deux un liquide à 25°C et à une pression atmosphérique de 101,325 kPa, et étant sensiblement exemptes de diphénylamine et d'antioxydants de diphénylamine substituée par des alkyles inférieurs.

11. Composition stabilisée comprenant un polyuréthane et une composition stabilisante comprenant :
au moins une arylamine secondaire ayant la formule I : 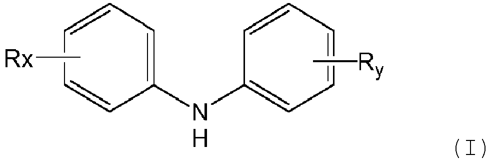 dans laquelle :
R ou chaque R, qui peuvent être identiques ou différents, indique indépendamment un groupe hydrocarbyle éventuellement substitué ayant au moins 5 atomes de carbone ;
x et y sont chacun indépendamment compris entre 0 et 5 à condition qu'au moins l'un de x et de y soit au moins égal à 1 ; et
un antioxydant phénolique ayant un poids moléculaire d'au moins 390,
la composition stabilisante et l'arylamine secondaire étant toutes les deux un liquide à 25°C et à une pression atmosphérique de 101,325 kPa, et étant sensiblement exemptes de diphénylamine et d'antioxydants de diphénylamine substituée par des alkyles inférieurs.

12. Article comprenant la composition stabilisée de la revendication 10 ou 11.

13. Procédé de stabilisation d'une composition polymère, comprenant l'incorporation ou l'application d'une composition stabilisante à un polyuréthane ou un polyol, la composition stabilisante comprenant :
au moins une arylamine secondaire ayant la formule I : 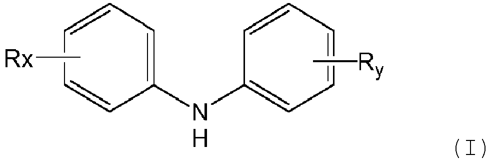 dans laquelle :
R ou chaque R, qui peuvent être identiques ou différents, indique indépendamment un groupe hydrocarbyle éventuellement substitué ayant au moins 5 atomes de carbone ;
x et y sont chacun indépendamment compris entre 0 et 5 à condition qu'au moins l'un de x et de y soit au moins égal à 1 ; et
un antioxydant phénolique ayant un poids moléculaire d'au moins 390,
la composition stabilisante et l'arylamine secondaire étant toutes les deux un liquide à 25°C et à une pression atmosphérique de 101,325 kPa, et étant sensiblement exemptes de diphénylamine et d'antioxydants de diphénylamine substituée par des alkyles inférieurs.

14. Procédé de production d'un polyuréthane, comprenant l'ajout d'une composition stabilisante à un polyol et la réaction ultérieure avec l'isocyanate pour former un polyuréthane, la composition stabilisante comprenant :
au moins une arylamine secondaire ayant la formule I : 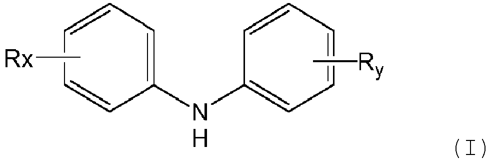 dans laquelle :
R ou chaque R, qui peuvent être identiques ou différents, indique indépendamment un groupe hydrocarbyle éventuellement substitué ayant au moins 5 atomes de carbone ;
x et y sont chacun indépendamment compris entre 0 et 5 à condition qu'au moins l'un de x et de y soit au moins égal à 1 ; et
un antioxydant phénolique ayant un poids moléculaire d'au moins 390,
la composition stabilisante et l'arylamine secondaire étant toutes les deux un liquide à 25°C et à une pression atmosphérique de 101,325 kPa, et étant sensiblement exemptes de diphénylamine et d'antioxydants de diphénylamine substituée par des alkyles inférieurs.
